# EUROPÄISCHE PATENTSCHRIFT

(11) **EP 1 681 504 B1**
(45) Veröffentlichungstag und Bekanntmachung des Hinweises auf die Patenterteilung: **13.02.2013**
(21) Anmeldenummer: 05026563.6
(22) Anmeldetag: 06.12.2005
(51) Int. Cl.: F16L 37/098, F16L 37/084

(54) **Kupplung zum Verbinden zweier Rohre**
Coupling for connecting two pipes
Raccord de liaison de deux conduites

(30) Priorität: 12.01.2005 DE 102005001380; 10.02.2005 DE 102005006330
(43) Veröffentlichungstag der Anmeldung: 19.07.2006
(73) Patentinhaber: NORMA Germany GmbH, 63477 Maintal (DE)
(72) Erfinder: Kertesz, Janos, 65719 Hofheim (DE); Wachter, Gerhard, 63654 Büdingen (DE)
(74) Vertreter: Knoblauch, Andreas

(56) Entgegenhaltungen:
- EP-A- 1 378 701
- US-A- 4 632 435
- US-A- 5 474 335

## Beschreibung

Die Erfindung betrifft eine Kupplung zum Verbinden zweier Rohre, die mit Endabschnitten in die Kupplung einführbar und auf jedem Endabschnitt mit einer umlaufenden Halterippe versehen sind, wobei die Kupplung wenigstens einen elastischen Ring aufweist, der wenigstens zwei langgestreckte Stege verbindet, und wobei die Kupplung Rastvorsprünge aufweist, die beim Einführen der Endabschnitte in die Kupplung hinter den Halterippen einrasten und durch Aufweiten wenigstens des einen Ringes ausrastbar sind, um die Verbindung der Rohre zu lösen.

Eine Kupplung dieser Art ist aus der EP 1 378 701 A1 bekannt. Sie wird als einstückiges Kunststoff-Spritzgußteil hergestellt. Wenn jedoch durch die mittels der Kupplung zu verbindenden Rohre ein sehr heißes Fluid geleitet werden soll, kann es sein, daß zumindest unmittelbar mit den Rohren in Berührung kommende Teile der Kupplung den hohen Temperaturen des Fluids bzw. der Rohre nicht standhalten. Entsprechendes gilt in der Nähe eines sehr heißen Gegenstands, z.B. des Motors oder der Auspuffanlage eines Kraftfahrzeugs. Ferner sind die Stege als Federarme ausgebildet. Die Kupplung hält daher auch keinen hohen Kräften stand, die bestrebt sind, die Rohre relativ zueinander abzuwinkeln, so dass die Verbindung undicht würde.

In US 5 474 335 ist eine Kupplung zum Verbinden flexibler Leitungen offenbart, die an ihren Endabschnitten Halterippen aufweisen. Mit diesen Halterippen sind die Endabschnitte in einen zylindrischen Körper der Kupplung einführbar. Der zylindrische Körper weist an seinen Enden Einschnitte auf, wodurch elastische Zähne gebildet sind. An den Zähnen sind radial nach innen weisende Rastvorsprünge vorgesehen. Beim Einschieben der Leitungen in die Kupplung werden die Ringe mit ihren Rastvorsprüngen radial aufgeweitet, bis die Rastvorsprünge hinter den Halterippen einrasten. Um ein unbeabsichtigtes Lösen der Kupplung zu verhindern, sind auf dem zylindrischen Körper axial verschiebbare Ringe angeordnet. Die Ringe sind über Scharniere miteinander verbunden.

Der Erfindung liegt die Aufgabe zugrunde, eine Kupplung der eingangs geschilderten Art anzugeben, die zumindest teilweise aus hitzebeständigerem und mechanisch höher belastbarem Material herstellbar ist.

Erfindungsgemäß ist diese Aufgabe dadurch gelöst, dass jeder Ring separat von den Stegen hergestellt ist.

Bei dieser Ausbildung ist man weitgehend frei in der Wahl der Materialien für die einzelnen Teile.

So ist es möglich, dass die Stege biegesteif sind, zum Beispiel durch Verwendung von entsprechend steifem Material, insbesondere Metall.

Zusätzlich können die Stege mit Versteifungsrippen versehen sein, insbesondere solchen, die sich in Längsrichtung der Stege erstrecken.

Ferner können mehr als zwei Stege vorgesehen sein, zum Beispiel drei oder vier gleichmäßig über den Umfang des Ringes oder der Ringe verteilte Stege oder zwei Stege auf der einen und zwei auf der anderen Seite der Kupplung.

Die Kupplung kann nur aus Metall bestehen.

Dabei kann wenigstens der einzige beziehungsweise jeder Ring Federstahl aufweisen.

Besonders vorteilhaft ist es, wenn jeder Ring als Federbandschelle ausgebildet ist. Eine Federbandschelle kann in herkömmlicher Weise gegen ihre Federkraft aufgeweitet werden, um die Kupplung zumindest von einem der beiden Rohre zu lösen, insbesondere, wenn die Federbandschelle an dem einen Ende oder in der Nähe des einen Endes der Stege befestigt ist, und damit die Verbindung der Rohre zu trennen. Wenn nur eine Federbandschelle als einziger Ring verwendet wird, kann sie auch in der Mitte der Länge der Stege befestigt sein. Hierbei läßt sich die Kupplung mittels der Federbandschelle auch von beiden Rohren gleichzeitig lösen.

Alternativ ist es möglich, daß die Stege und/oder der eine Ring oder wenigstens einer der Ringe Kunststoff, insbesondere verstärkten Kunststoff, aufweisen.

Ferner können die Ringe auch in herkömmlicher Weise als geschlossene runde Ringe mit einem größeren Durchmesser als die Rohre oder oval ausgebildet sein. Wenn sie oval sind, sollten die Rastvorsprünge innerhalb derjenigen Bereiche der Ringe liegen, deren Krümmungsradius am größten ist. Die Ringe lassen sich dann durch radiales Zusammendrücken der zwischen den Rastvorsprüngen liegenden Ringbereiche in den mit den Rastvorsprüngen versehenen Bereichen radial aufweiten, um die Rastvorsprünge hinter einer der Halterippen oder beiden auszurasten und die Verbindung der Rohre durch die Kupplung zu lösen.

Sodann können die Stege einen Metallkern aufweisen, der mit Kunststoff umspritzt ist.

Bei zwei Ringen kann der eine mit dem einen Ende und der andere mit dem anderen Ende jedes Steges verbunden sein.

Ferner kann jeder Steg pro Ring eine Nut zur Aufnahme des Ringes aufweisen.

Hierbei können die Stege in jedem Ende eine Nut zur Aufnahme eines Ringes aufweisen.

Jede Nut kann sich quer zur Längsrichtung der Stege erstrecken, während sich die Tiefe der Nuten in Längsrichtung der Stege erstreckt und die Weite der Nuten der Dicke der Ringe entspricht.

Die Ringe können aus Streifen geformt sein, die in wenigstens einer der Nuten befestigt sind. Dabei können die Enden der Streifen formschlüssig verbunden sein, und jeder Ring kann im Preß- oder Schnappsitz, form- oder stoffschlüssig in wenigstens einer Nut der Stege befestigt sein.

Vorzugsweise ist jeder Ring gewellt.

Alternativ kann jeder Ring als geschlossener Ring im Spritzgußverfahren hergestellt sein. Dadurch entfällt die Herstellung aus Streifen, deren Zusammenbiegung in die Form eines Ringes und das Verbinden der Streifenenden.

Eine weitere Möglichkeit besteht darin, daß die Ringe durch langgestreckte Teile verbunden sind, die in Längsnuten der Stege im Schnappsitz befestigt sind. Dies hat den Vorteil, daß bei kleineren Rohrdurchmessern die Ringe unverändert bleiben können und nur die Krümmungsradien der Stege und ihrer Rastvorsprünge entsprechend verkleinert werden müßten.

Ferner können die Stege thermoplastischen Kunststoff aufweisen, wobei jeder Ring von dem Material der Stege umspritzt ist. Hierbei einfällt ein separater Zusammenbau der Ringe und Stege. Dennoch können sie aus unterschiedlichen Materialien hergestellt werden. Wenn die Ringe aus Metall bestehen, sind sie gleichzeitig durch den sie umgebenden Kunststoff gegen Korrosion geschützt.

Bei Verwendung von zwei Stegen können die Stege durch ein Gelenk verbunden sein, insbesondere ein Filmgelenk oder Scharnier. Sie bleiben dann immer miteinander verbunden, was insbesondere bei der Lagerung, dem Transport oder der Montage von Vorteil ist.

Wenn die Ringe als Federbandschellen an oder bei den Enden der Stege ausgebildet sind, sollten die Spreizbacken der einen Federbandschelle um 180° in Umfangsrichtung der Kupplung gegenüber denen der anderen Federbandschelle versetzt sein. Bei dieser Anordnung lassen sich die Stege beim Aufweiten der Federbandschellen durch Spreizen ihrer Spreizbacken gleichmäßig über den Umfang der Kupplung radial nach außen bewegen, um die Kupplung von den Rohren zu lösen.

Sodann kann jeder Steg alternativ aus einem Bleichteil durch Stanzen und Biegen geformt sein.

Eine weitere Ausführungsform kann darin bestehen, daß bei Ausbildung des Ringes oder jedes Ringes aus Federstahl jeder Ring eine Unterbrechung und ein der Unterbrechung diametral gegenüberliegendes Gelenk aufweist, das die Stege Kunststoff aufweisen und daß jeder Ring, bis auf die Unterbrechung und das Gelenk, in dem Kunststoff der Stege festgehalten ist. Hierbei erstreckt sich jeder Steg nahezu über den halben Ringumfang, etwa in der Form der einen Hälfte eines durch einen Axialschnitt geteilten Hohlzylinders. Die Stege sind daher um eine sich quer zu ihrer axialen Länge erstreckende Achse sehr biegesteif. Aufgrund der Unterbrechung(en) und des Gelenks bzw. der Gelenke lassen sie sich durch Einführung eines Spreizwerkzeugs, zum Beispiel einer Spreizzange, in den durch die Unterbrechung gebildeten Spalt oder Schlitz etwa radial zu den Rohren auf einfache Weise, einschließlich des Rings oder der Ringe, aufweiten, um die Rastvorsprünge mit den Halterippen der Rohre außer Eingriff zu bringen und die Kupplung zu öffnen, so daß zumindest eines der miteinander gekuppelten Rohre aus der Kupplung herausgezogen werden kann, um die Rohre gewünschtenfalls wieder zu trennen.

Hierbei kann das Gelenk ein elastisch biegsamer Ringteil sein. Der Ringteil ist somit bei jedem Ring ein integraler, einstückiger Teil des Rings. Das Gelenk entsteht mithin gleichzeitig mit der Herstellung des Rings.

Vorzugsweise bildet das Gelenk eine nach außen auf dem Ring vorstehende Ausbauchung. Aufgrund dieser Form des Gelenks werden die Stege und damit ihre Rastvorsprünge beim Öffnen der Kupplung weitgehend gleich weit in radialer Richtung der Rohre nach außen bewegt und ohne große Spreizbewegung des Rings oder der Ringe mit den Halterippen der Rohre außer Eingriff gebracht. Dies ist beispielsweise bei sehr kleinen Rohrdurchmessern und dementsprechend kleinem Ringdurchmesser von Vorteil.

Ferner kann jeder Ring mit dem Kunststoff der Stege umspritzt sein. Dies erspart eine separate Montage der Kupplungsteile. Gleichzeitig bildet der Kunststoff einen Korrosionsschutz für den Ring oder die Ringe.

Um das Öffnen der Kupplung zu erleichtern, wenn die Unterbrechung nur einen sehr schmalen Spalt freiläßt, der das Einführen eines Spreizwerkzeugs erschweren würde, können die Stege beiderseits der Unterbrechung radial nach außen vorstehende Noppen aufweisen. Das Spreizwerkzeug kann dann leicht zwischen diesen Noppen eingesetzt werden. Die Ausbildung der Noppen ist auf einfache Weise gleichzeitig mit dem Spritzvorgang der Stege möglich.

Vorzugsweise ist auch bei dieser Ausführungsform dafür gesorgt, daß nahe bei oder an jedem Stegende jeweils ein Ring vorgesehen ist und die Unterbrechung des einen Rings gegenüber der des anderen in Umfangsrichtung der Ringe um 180° versetzt angeordnet ist. Auch diese Anordnung der Unterbrechungen der Ringe trägt dazu bei, daß sich die Stege über ihren Umfang radial gleichmäßig so weit von den Rohren abheben lassen, bis ihre Rastvorsprünge mit den Halterippen der Rohre außer Eingriff kommen, um die Rohre trennen zu können.

Zusätzlich können die Stege durch ein die oder jede Unterbrechung lösbar überbrückendes Verbindungsmittel zusammengehalten sein. Dieses Verbindungsmittel erhöht die Sicherheit gegen ein Aufspreizen der Ringe durch übermäßige Biegekräfte, die auf die Kupplung ausgeübt werden. Gleichzeitig stellt es einen Montageindikator dar, der erkennen läßt, ob die Verbindung der Rohre durch die Kupplung richtig ausgeführt worden ist.

Aus der EP 1378701 A1 ist auch eine Kupplung zum Verbinden zweier Rohre bekannt, die mit Endabschnitten in die Kupplung einführbar und auf jedem Endabschnitt mit einer umlaufenden Halterippe versehen sind, wobei die Kupplung wenigstens zwei elastische Ringabschnitte aufweist, die wenigstens zwei langgestreckte Stege verbinden, und wobei die Kupplung Rastvorsprünge aufweist, die beim Einführen der Endabschnitte in die Kupplung hinter den Halterippen einrasten und durch Verformen wenigstens des einen Ringabschnitts ausrastbar sind, um die Verbindung der Rohre zu lösen.

Demgegenüber liegt der Erfindung ebenfalls die Aufgabe zugrunde, eine Kupplung anzugeben, die zumindest teilweise aus hitzebeständigerem und mechanisch höher belastbarem Material herstellbar ist.

Die erfindungsgemäße zweite Lösung dieser Aufgabe besteht ebenfalls darin, daß jeder Ringabschnitt separat von den Stegen hergestellt ist.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt durch eine Verbindung zweier Rohre mittels eines ersten Ausführungsbeispiels einer erfindungsgemäßen Kupplung
- Fig. 2: den gleichen Axialschnitt durch die zu verbindenden Rohre wie den in Fig. 1 dargestellten, jedoch ohne die Kupplung,
- Fig. 3: eine perspektivische Ansicht der Kupplung nach Fig. 1,
- Fig. 4: einen Axialschnitt der Kupplung nach Fig. 1,
- Fig. 5: eine Vorderansicht eines Steges der Kupplung nach Fig. 1,
- Fig. 6: eine Seitenansicht des Steges nach Fig. 5,
- Fig. 7: eine Axialansicht eines Ringes der Kupplung nach Fig. 1,
- Fig. 8: eine vergrößerte Ansicht des Ausschnitts X der Ansicht des Ringes nach Fig. 7,
- Fig. 9: eine Seitenansicht des Ringes nach Fig. 7,
- Fig. 10: eine Seitenansicht eines etwas abgewandelten Steges der Kupplung nach Fig. 1,
- Fig. 11: eine weitere Abwandlung eines Steges der Kupplung nach Fig. 1 im Längsschnitt,
- Fig. 12: eine gegenüber den Fig. 7 bis 9 etwas abgewandelte Ausführungsform eines Ringes der Kupplung nach Fig. 1 in aufgebogener Darstellung vor dem Schließen des Ringes,
- Fig. 13: eine weitere Abwandlung eines Ringes der Kupplung nach Fig. 1 in aufgebogener Darstellung vor dem Schließen des Ringes,
- Fig. 14: eine perspektivische Explosionsdarstellung eines zweiten Ausführungsbeispiels einer erfindungsgemäßen Kupplung mit zwei Stegen und einer Federbandschelle,
- Fig. 15: eine Axialansicht eines dritten Ausführungsbeispiels der Erfindung, bei der die Form der Ringe gegenüber dem Ausführungsbeispiel nach Fig. 1 abgewandelt ist,
- Fig. 16: eine Seitenansicht eines vierten Ausführungsbeispiels der Erfindung,
- Fig. 17: eine Axialansicht des Ausführungsbeispiels nach Fig. 16,
- Fig. 18: einen vergrößerten Ausschnitt der Kupplung nach den Fig. 16 und 17 mit einer abgewandelten Ausführungsform eines Gelenks der Kupplung nach den Fig. 16 und 17,
- Fig. 19: eine gegenüber dem vierten Ausführungsbeispiel dahingehend abgewandelte Ausführungsform, daß anstelle eines breiten Ringes aus Federstahl zwei schmalere vorgesehen sind, und
- Fig. 20: eine Axialansicht eines Teils eines fünften Ausführungsbeispiels einer erfindungsgemäßen Kupplung.

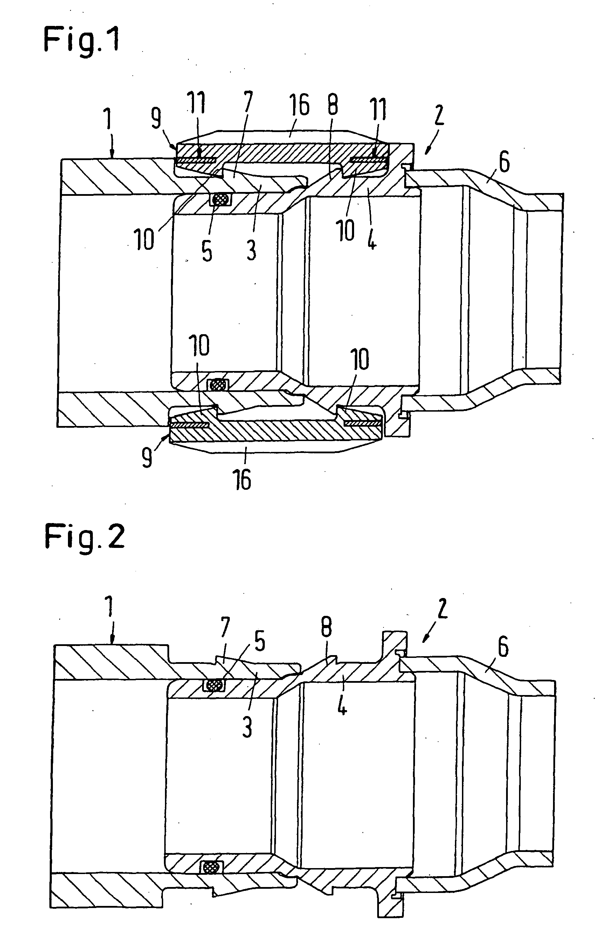

Das in den Fig. 1 und 3 bis 9 dargestellte Ausführungsbeispiel der erfindungsgemäßen Kupplung und ihrer Einzelteile dient zum Verbinden zweier nur teilweise dargestellter Rohre 1 und 2 aus thermoplastischem Kunststoff oder Metall. Die Rohre 1 und 2 sind in Fig. 2 ohne die Kupplung dargestellt. Sie sind mit Endabschnitten 3 und 4 in die Kupplung eingeführt und ineinandergesteckt. Die ineinandergesteckten Bereiche der Endabschnitte 3 und 4 sind durch einen Dichtring 5 gegeneinander abgedichtet. Der Endabschnitt 4 ist mit dem übrigen Teil 6 des Rohres 2 verschweißt. Jeder Endabschnitt 3 und 4 ist mit einer umlaufenden Halterippe 7 bzw. 8 versehen.

Die Kupplung ist an den Enden axialer, biegesteifer Stege 9 mit radial nach innen ragenden Rastvorsprüngen 10 versehen. Die Rastvorsprünge 10 rasten bzw. schnappen beim Einführen der Endabschnitte 7 und 8 in die Kupplung - wobei sie gleichzeitig zusammengesteckt werden - hinter den Halterippen 7 und 8 ein. Zu diesem Zweck sind die Stege 9 an ihren Enden durch elastische Ringe 11 verbunden und die Halterippen 7, 8 sowie die Rastvorsprünge 10 mit Auflaufschrägen versehen. Beim Verbinden der Rohre 1, 2 gleiten daher die Rastvorsprünge 10 über die Halterippen 7, 8 unter elastischer Aufweitung der Ringe 11 hinweg, bis die Rastvorsprünge 10 hinter den Halterippen 7, 8 einrasten.

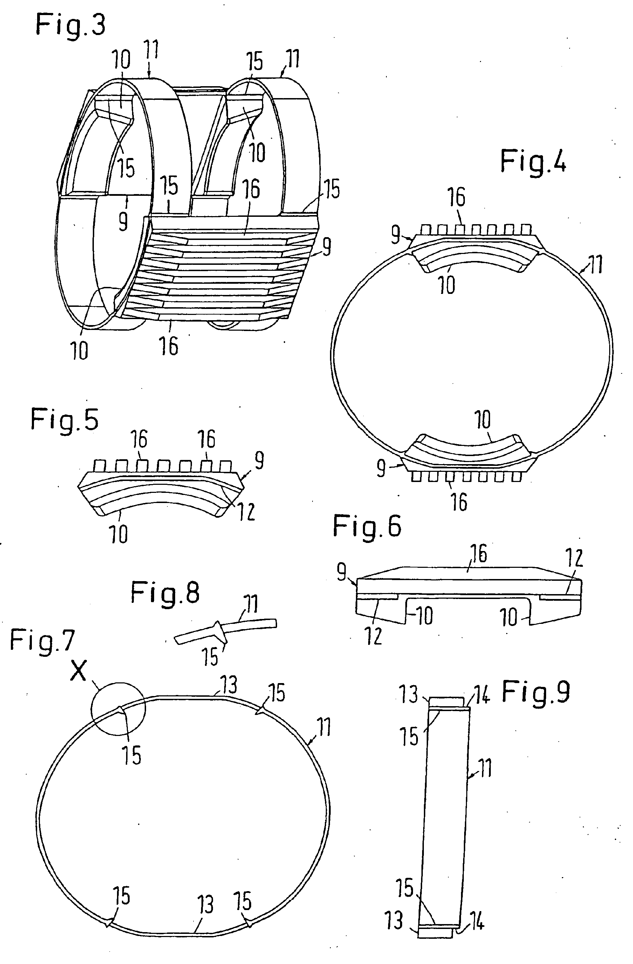

Um die Verbindung der Rohre 1, 2 lösen zu können, sind die Ringe 11 etwa oval oder elliptisch geformt (siehe Fig. 4 und 7) und die Stege in den Bereichen, die zwischen den den kleineren Krümmungsradius aufweisenden Bereichen liegen, mit den Ringen 11 verbunden. Alternativ können die Ringe 11 auch kreisförmig sein, wobei ihr Durchmesser größer als der Innendurchmesser der Rastvorsprünge 10 ist. Durch radiales Zusammendrücken der zwischen den Stegen 9 liegenden Bereiche können die mit den Stegen 9 verbundenen Bereiche der Ringe 11 so weit auseinandergedrückt werden, daß die Innenkanten der Rastvorsprünge 10 über den Umkreis der Halterippen 7, 8 hinaus radial nach außen gedrückt werden, wonach die Rohre 1, 2 getrennt werden können. Es ist aber auch möglich, nur einen Ring 11 in den mit den Stegen 9 verbundenen Bereichen durch das radiale Zusammendrücken der zwischen den Stegen 9 liegenden Ringbereiche aufzuweiten, um die Rohre 1, 2 zu trennen.

Die Stege 9 und Ringe 11 werden getrennt hergestellt und dann miteinander verbunden. Die Ringe können daher individuell in verschiedenen Formen und aus verschiedenen Materialien hergestellt werden.

Bei dem Ausführungsbeispiel nach den Fig. 1 und 3 bis 9 sind die Ringe 11 aus flachen Streifen hergestellt, deren Enden miteinander verbunden werden, zum Beispiel durch Schweißen. Um die Ringe 11 mit den Stegen 9 zu verbinden, sind die Stege 9 in ihren Enden mit jeweils einer Nut 12 versehen. Die Nuten 12 erstrecken sich im wesentlichen quer zu den Stegen 9. Die Tiefe der Nuten 12 erstreckt sich in Längsrichtung der Stege 9, und die Weite der Nuten 12 entspricht der Dicke der Ringe 11. Die Ringe 11 sind mit axial schmaleren Bereichen 13, siehe insbesondere Fig. 9, in die Nuten 12 eingesetzt und darin befestigt. Die schmaleren Bereiche 13 sind etwas abgewinkelt, ebenso wie die sie aufnehmenden Nuten 12, siehe Fig. 4, 5 und 7. Die Abwinkelung ebenso wie die Abstufungen 14 an den Übergängen von den schmaleren Bereichen 13 zu den zwischen ihnen liegenden breiteren Bereichen der Ringe 11 verhindern eine relative Verdrehung der Ringe 11 und Nuten 12 in Umfangsrichtung der Ringe 11, wozu auch die Abstufungen 14 beitragen, die an den Seiten der Stege 9 neben dem Nutengrund anliegen. Zusätzlich sind die schmaleren Bereiche 13 durch Wülste 15 begrenzt, von denen der im Ausschnitt X liegende in Fig. 8 vergrößert dargestellt ist. Auch diese Wülste 15 tragen dazu bei, daß sich die Stege 9 und Ringe 11 nicht in Umfangsrichtung der Ringe 11 relativ zueinander verdrehen können.

Die Stege 9 sind ferner mit Versteifungsrippen 16 versehen, die sich auf der Außenseite der Stege 9 in deren Längsrichtung parallel zueinander erstrecken. Dargestellt sind 7 Versteifungsrippen 16. Die Anzahl der Versteifungsrippen 16 hängt jedoch von der Breite der Stege 9 und der Versteifungsrippen 16 sowie der erforderlichen Steifigkeit der Stege 9 ab.

Sämtliche Teile der Kupplung können aus Metall bestehen. Die Ringe 11 bestehen Vorzugsweise aus Federstahl, können aber auch elastisch biegsamen Kunststoff aufweisen. Ferner ist es möglich, daß einer der Ringe 11 Metall und der andere Kunststoff aufweist. Auch die Stege 9 können Kunststoff aufwiesen. Der Kunststoff sowohl der Stege 9 als auch der Ringe 11 kann eine Verstärkung aufweisen, zum Beispiel aus Glasfasern, Kohlefasern, Glasperlen oder Teilchen aus Mineralien. Die Stege 9 können aber auch einen Metallkern aufweisen, der mit Kunststoff umspritzt ist.

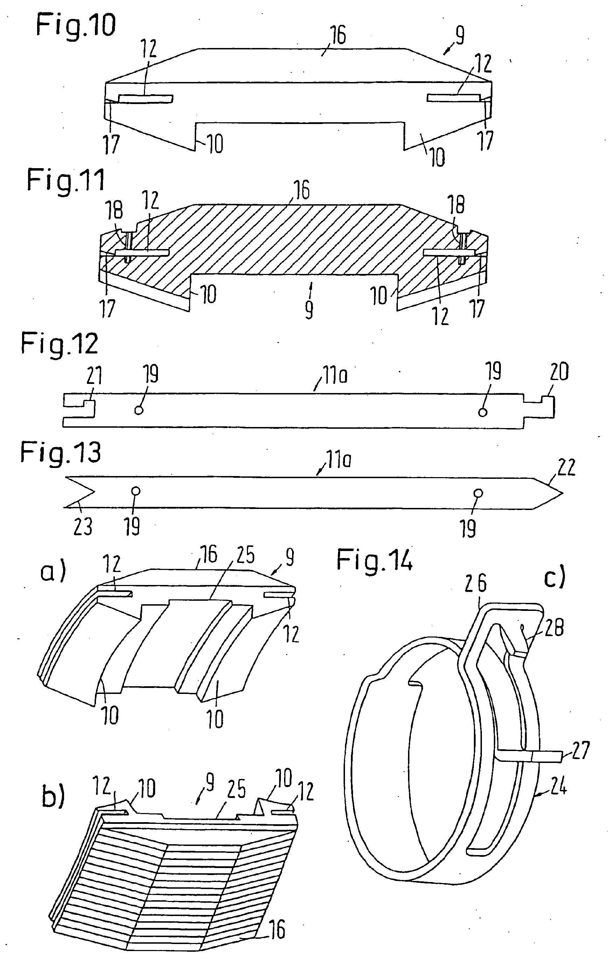

Die Befestigung der Ringe 11 in den Nuten 12 ist auf verschiedene Arten möglich. So ist es möglich, sie im Preßsitz oder stoffschlüssig, zum Beispiel durch Schweißen oder Kleben, in den Nuten 12 zu befestigen. Ferner ist es möglich, sie formschlüssig in den Nuten 12 zu befestigen. Ein Beispiel einer formschlüssigen Verbindung ist in Fig. 10 dargestellt. Hierbei sind die Nuten 12 an der Innenseite des einen ihrer sich quer zur Längsrichtung des Steges 9 erstreckenden Ränder mit elastisch nachgiebigen Rastvorsprüngen 17 versehen, die beim Einführen der Ringe 11 in die Nuten 12 ausweichen und hinter den bis an den Nutengrund eingeführten Ringen 11 einrasten. In diesem Fall bestünden die Stege 9 aus etwas elastischem Kunststoff oder aus einem mit etwas elastischem Kunststoff umspritzten Metallkern.

Nach Fig. 11 ist es aber auch möglich, quer zu den Nuten 12 in den Stegen 9 Gewindebohrungen 18 auszubilden, die sich zumindest bis zu den Nuten 12 oder - wie in Fig. 11 dargestellt - über diese hinaus erstrecken. Durch diese Gewindebohrungen 18 und entsprechende Öffnungen 19 (siehe Fig. 12 und 13) in den Ringen 11 können Schrauben hindurchgeschraubt werden. Zusätzlich können auch hierbei wieder die Rastvorsprünge 17 vorgesehen sein. Die Kupplung hält dann sehr hohen, durch die Rohre 1, 2 auf die Kupplung ausgeübten, axialen Zugkräften stand.

Die Ringe 11 können von vornherein als geschlossene Ringe ausgebildet sein. Sie können aber auch als zunächst ebene Streifen ausgebildet sein, die dann etwa kreisförmig umgebogen und an ihren Enden verbunden werden. Beispielsweise können die Enden dann verschweißt oder formschlüssig verbunden werden. So kann nach Fig. 12 eine formschlüssige Verbindung der Enden der Streifen 11a dadurch hergestellt werden, daß das eine Ende als Haken 20, vorzugsweise als rechtwinkliger Haken, ausgebildet und das andere Ende mit einer der Form des Hakens 20 angepaßten Hinterschneidung 21 versehen wird, in die der Haken 20 nach dem oder beim Biegen des Streifens 11a in die Kreisform eingehängt wird. Die Verbindungsstelle kann dann beim Zusammensetzen der Ringe 11 und Stege 9 in eine der Nuten 12 nach Fig. 11 gelegt und zusätzlich durch zwei Schrauben gesichert werden, die jeweils durch eine von zwei Gewindebohrungen 18, die die betreffende Nut 12 durchsetzen, und die nahe den Enden des Streifens 11a angeordneten Öffnungen 19 hindurchgeschraubt werden.

Alternativ kann der Streifen 11a gemäß Fig. 13 an seinem einen Ende mit seiner keilförmigen Spitze 12 und an seinem anderen Ende mit einem der Form der Spitze 22 angepaßten keilförmigen Schlitz 23 versehen sein, in dem die Spitze 22 beim Zusammenbiegen des Streifens 11a eingeführt wird. Die Verbindungsstelle kann dann wiederum in eine Nut 12 des Stegs 9 nach Fig. 11 eingeführt und durch zwei die Gewindebohrungen 18 und Löcher 19 durchsetzende Schrauben gesichert werden.

Fig. 14 zeigt ein Ausführungsbeispiel einer erfindungsgemäßen Kupplung in Explosionsdarstellung, bei dem zwei sich gegenüberliegende Stege 9 auf ihrer radial inneren Seite durch einen Ring in Form einer Federbandschelle 24 aus Federstahl verbunden sind. Die Federbandschelle 24 ist dabei an den radial inneren Seiten der Stege 9 in quer zu den Stegen 9 verlaufenden Nuten 25 passend eingesetzt und darin befestigt, zum Beispiel durch Klebstoff und/oder Schrauben oder im Schnappsitz. Im dargestellten Ausführungsbeispiel ist die Federbandschelle in den Nuten 25 angeklebt.

Die Federbandschelle 24 ist eine herkömmliche Schlauchschelle, die sich durch ihre eigene Federkraft um einen auf einem Rohr oder Rohrstutzen festzuklemmenden Schlauch zusammenzieht und durch Aufweiten mittels einer an ihren radialen Spreizbacken 26 und 27 angesetzten Zange wieder gelöst werden kann. Dabei vergrößert sich der Durchmesser der Federbandschelle, bis ein Vorsprung 28 der einen Spreizbacke 26 an der anderen Spreizbacke 27 anschlägt.

Wenn bei dieser Ausbildung der Kupplung die Endabschnitte 3 und 4 der Rohre 1, 2 in die Kupplung eingeführt und zusammengesteckt werden, wird die an den Stegen 9 befestigte Federbandschelle 24 gegen ihre Federkraft aufgeweitet, bis die Rastvorsprünge 10 hinter den Halterippen 7, 8 einrasten. Zum Lösen der Kupplung beziehungsweise zum Trennen der Rohre 1, 2 wird dann die Federbandschelle 24 mittels der Zange oder manuell so weit aufgeweitet, bis die Innenkanten der Rastvorsprünge 10 auf einem größeren Kreisbogen als die Außenkanten der Halterippen 7, 8 liegen.

Alternativ kann die Federbandschelle auch am äußeren Umfang der Stege 9 befestigt sein, zum Beispiel ebenfalls in einer Quernut eingeklebt, im Schnappsitz oder mittels Schrauben befestigt.

Ferner kann anstelle der dargestellten Federbandschelle 24 eine andere Schelle verwendet werden, zum Beispiel eine spannbare Schlauchschelle, die sich beim Öffnen aufweitet, zum Beispiel eine sogenannte Schneckengewindeschelle.

Bei entsprechender Ausbildung der Nuten 12 ist es ferner möglich, jeweils eine Federbandschelle 24 in jeder Nut 12 zu befestigen.

Die Ringe 11 können durch langgestreckte schmale Teile verbunden sein, die in Längsnuten der Stege 9 im Schnappsitz befestigt sind. Bei noch kleinerem Durchmesser der Rohre können die Ringe 11 dann unverändert bleiben. Nur die Krümmungsradien der Stege 9 und ihrer Rastvorsprünge 10 müßten entsprechend verringert werden.

Wenn die Stege 9 aus thermoplastischem Kunststoff hergestellt sind und jeder Ring 11, 24 von dem Material der Stege 9 umspritzt ist, entfällt ein nachträglicher Zusammenbau der Stege 9 und Ringe 11, 24. Dennoch können die Stege 9 und Ringe 11, 24 aus unterschiedlichen Materialien hergestellt werden. Wenn die Ringe 11, 24 aus Metall hergestellt sind, sorgen die Stege, soweit sie das Material der Ringe 11, 24 umgeben, gleichzeitig für eine Korrosionsschutz der Ringe 11, 24.

Ferner können bei zwei Stegen 9 die Stege 9 durch ein (nicht dargestelltes) Gelenk, insbesondere ein Filmgelenk oder Scharnier, verbunden sein. Die Stege 9 bleiben dann stets miteinander verbunden, was insbesondere ihre Montage, Beförderung oder Lagerung vereinfacht.

Bei Ausbildung der Ringe als Federbandschellen 24 an oder bei den Enden der Stege 9 sollten die Spreizbacken 26, 27 der einen Federbandschelle 24 um 180° in Umfangsrichtung der Kupplung gegenüber denen der anderen Federbandschelle versetzt sein. Dadurch lassen sich die Stege gleichförmig über den gesamten Umfang der Kupplung in radialer Richtung beim Aufweiten der Federbandschellen nach außen bewegen, wenn die Stege 9 entsprechend lang ausgebildet sind. Darüber hinaus lassen sich die Spreizbacken 26, 27 der einen Federbandschelle mit der einen Hand und die Spreizbacken der anderen Federbandschelle mit der anderen Hand, sei es unmittelbar manuell oder mittels einer Zange, zusammendrücken, um die Federbandschellen zu spreizen bzw. aufzuweiten.

Dies erleichtert die Betätigung der Federbandschellen, insbesondere wenn sie eine hohe Federkraft aufweisen, um die Kupplung zu öffnen.

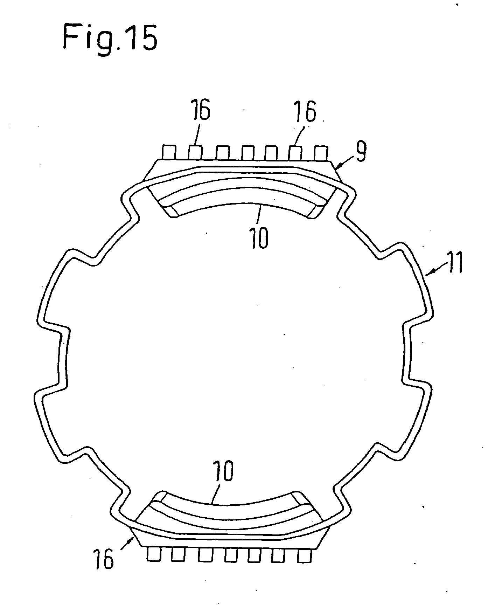

Fig. 15 stellt ein Ausführungsbeispiel der erfindungsgemäßen Kupplung in Axialansicht dar, bei der die Ringe 11 ebenfalls aus einem Federband hergestellt sind, das jedoch gewellt ist. Die Wellenform kann etwa rechteckförmig sein, wie es dargestellt ist. Alternativ kann sie abgewandelte Halbwellen, zum Beispiel halbkreisförmige Halbwellen, aufweisen. Die Wellenform muß ferner nicht periodisch sein. Je nach Umfang der Ringe 11, Breite der Stege 9 und Breite der Halbwellen, können statt je nur zwei Stegen 9 auch drei oder vier Stege 9 vorgesehen sein. Dabei können die Stege 9 gleichmäßig über den Umfang der Ringe 11 verteilt angeordnet sein, was auch für die ungewellten Ringe 11 oder Schellen gilt. Die Wellen können gleichzeitig dazu beitragen, eine Verschiebung der Stege 9 in Umfangsrichtung der Ringe 11 zu verhindern.

Anstelle der in Fig. 14 dargestellten Federbandschelle 24 aus einem flachen Band oder Streifen kann auch eine Federbandschelle mit einem gewellten Band oder Streifen verwendet werden.

Ferner können die Stege, in ähnlicher Form wie die der Stege 9, aus einem Blechteil durch Stanzen und Biegen hergestellt sein.

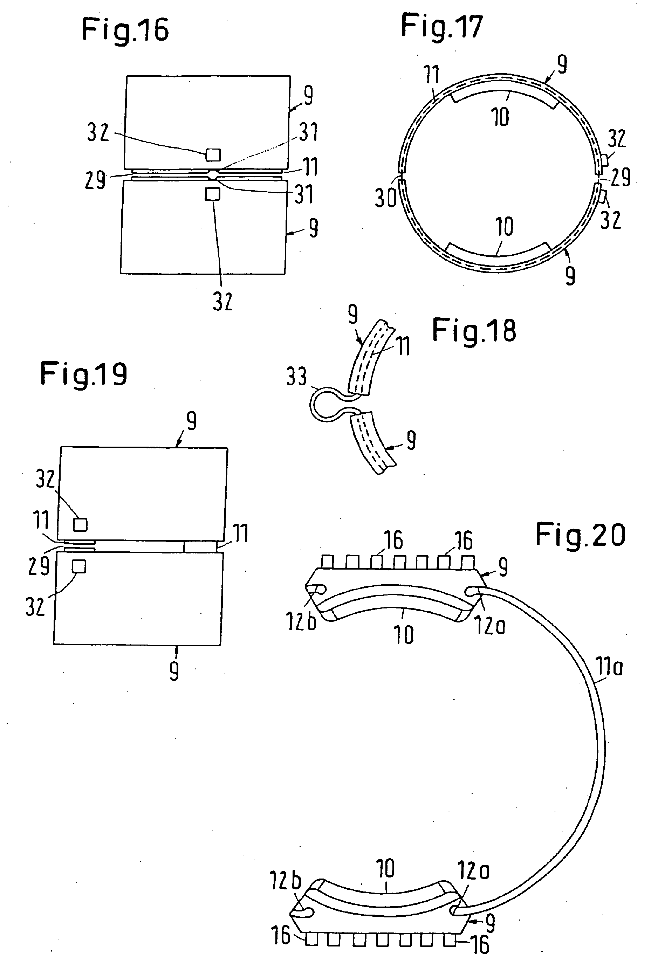

Bei dem Ausführungsbeispiel der erfindungsgemäßen Kupplung nach den Fig. 16 und 17 besteht die Kupplung aus einem Ring 11 und zwei Stegen 9. Bei diesem Ausführungsbeispiel entspricht die Breite des Rings 11 nahezu der axialen Länge der Stege 9. Der Ring 11 ist ebenfalls aus einem Federstahlband hergestellt. Er hat jedoch eine schmale Unterbrechung 29, das heißt einen axial durchgehenden Schlitz oder Spalt. Die Unterbrechung 29 könnte aber auch breiter sein. Der Ring 11 wäre dann etwa C-förmig. Grundsätzlich müßte er sich nur über mehr als 180° in Umfangsrichtung erstrecken.

Die Stege 9 bestehen wiederum aus Kunststoff, mit dem je eine Hälfte des Rings 11 umspritzt ist. Dadurch wird der Ring 11 in den Stegen 9 festgehalten. Das Umspritzen des Rings erspart eine separate Montage der Kupplungsteile. Gleichzeitig bildet der Kunststoff einen Korrosionsschutz für den Ring.

Die Stege 9 erstrecken sich einerseits bis in die Nähe der Unterbrechung 29 des Rings 11 und andererseits bis in die Nähe eines Gelenks 30, das einstückig mit dem Ring 11 diametral zur Unterbrechung 29 ausgebildet ist und sich durch die Biegeelastizität des den Ring 11 bildenden Federstahlbandes zwischen den Stegen 9 ergibt. Da die Stege 9 sich jeweils über nahezu 180° des Umfangs der Kupplung beziehungsweise des Rings 11 erstrecken und darüber hinaus durch den breiten Ring 11 verstärkt sind, sind sie quer zu ihrer axialen Längsrichtung, insbesondere um eine durch die Unterbrechung 29 und das Gelenk 30 verlaufende Querachse, sehr biegesteif. Die Versteifungsrippen 16 der zuvor geschilderten Ausführungsbeispiele können daher entfallen. Die Stege 9 sind jedoch ebenso wie bei den vorhergehenden Ausführungsbeispielen mit Rastvorsprüngen 10 versehen.

Um wenigstens eines der Rohre 1, 2 (Fig. 1 und 2) aus der Kupplung, nach rechts oder links, in Fig. 16 gesehen, zu entfernen, um die Verbindung der Rohre 1, 2 zu trennen, braucht lediglich ein Spreizwerkzeug, zum Beispiel eine einfache Spreizzange, in die Unterbrechung 29 eingeführt und betätigt zu werden, so daß der Ring 11 um das Gelenk 30 herum aufgebogen und damit auch die Stege 9 und deren Rastvorsprünge 10 radial auseinanderbewegt werden, bis die Rastvorsprünge 10 mit den Halterippen 7, 8 (Fig. 1 und 2) außer Eingriff kommen.

Um die Unterbrechung 29 möglichst schmal ausbilden zu können, können in den Enden des Rings 11 Aussparungen 31 ausgebildet sein, in die eine Spreizzange mit ihren Spreizarmen hineinpaßt. Alternativ oder zusätzlich können die Stege 9 in der nähe der Unterbrechung 29 mit radial nach außen vorstehenden, angeformten Noppen 32 versehen sein, an denen die Spreizzange oder ein anderes Spreizwerkzeug angreifen kann.

Bei der als vergrößerter Ausschnitt in Fig. 18 dargestellten Abwandlung des in den Fig. 16 und 17 dargestellten Ausführungsbeispiels ist das Gelenk 33 des Rings 11 eine nach außen aus dem Ring 11 zwischen den Stegen 9 gegenüber der Unterbrechung 29 vorstehende, hier etwa omega-förmige Ausbauchung, die aber auch C-förmig sein kann. Aufgrund dieser Form des Gelenks 33 werden die Stege 9 und damit ihre Rastvorsprünge 10 beim Öffnen der Kupplung weitgehend gleich weit in radialer Richtung der Rohre bewegt und ohne große Spreizbewegung des Rings 11 mit den Halterippen 7, 8 der Rohre 1, 2 außer Eingriff gebracht. Dies ist besonders bei sehr kleinen Rohrdurchmessern und dementsprechend kleinem Ringdurchmesser von Vorteil.

Bei dem Ausführungsbeispiel nach Fig. 19 sind anstelle des einen breiten Rings 11, wie in den Fig. 16 und 17 dargestellt ist, zwei schmalere Ringe 11 vorgesehen. Sie sind nahe bei oder an jedem axialen Stegende in dem Kunststoff der Stege 9 eingebettet beziehungsweise von diesem umspritzt. Dabei ist die Unterbrechung 29 des einen Rings 11 gegenüber der des anderen in Umfangsrichtung der Ringe 11 um 180° versetzt. Auch diese Anordnung der Unterbrechungen 29 der Ringe 11 trägt dazu bei, das sich die Stege 9 über ihren Umfang radial gleichmäßig so weit von den Rohren 1, 2 abheben lassen, bis ihre Rastvorsprünge 10 mit den Halterippen 7, 8 der Rohre 1, 2 außer Eingriff kommen, um die Rohre 1, 2 trennen zu können. Dabei kann auch nur einer der Ringe 11 zum Entkuppeln nur eines der Rohre 1, 2 gespreizt werden.

Bei dem Ausführungsbeispiel nach den Fig. 16 bis 19 können die Stege 9 in ihrer axialen Mitte jeweils mit einer radial nach innen vorstehenden Anschlagrippe zur Einschubbegrenzung und axialen Zentrierung der Rohrenden in der Kupplung versehen sein.

Zusätzlich können die Stege durch ein die oder jede Unterbrechung lösbar überbrückendes (nicht dargestelltes) Verbindungsmittel zusammengehalten sein. Das Verbindungsmittel kann einen Ring, vorzugsweise einen ovalen oder langgestreckten Ring, aufweisen, der in Hinterschneidungen von Vorsprüngen, zum Beispiel der Noppen, auf den Stegen beiderseits der Unterbrechung(en) einrastbar ist, oder solche Vorsprünge auf den Stegen aufweisen, die die Unterbrechung(en) mit axialen Haken überbrücken und an wenigstens einem der Vorsprünge, der auf der einen Seite der Unterbrechung ausgebildet ist, angeformt oder befestig sind und hinter einem Vorsprung, der auf der anderen Seite der Unterbrechung ausgebildet ist, eingehakt oder eingerastet werden können. Statt der Haken können auch nur axiale Fortsätze an wenigstens einem der Vorsprünge, der auf der einen Seite der Unterbrechung(en) auf einem oder dem Steg vorgesehen ist, bis neben einen gegenüberliegenden Vorsprung, der auf der anderen Seite der Unterbechung(en) vorgesehen ist, ragen und an diesem gegenüberliegenden Vorsprung durch einen Bolzen lösbar befestigt sind, der Löcher in den Fortsätzen und in dem gegenüberliegenden Vorsprung durchsetzt.

Dieses Verbindungsmittel bietet eine zusätzliche Sicherheit gegen ein Aufspreizen der Ringe bei hohen Biegekräften, die auf die Kupplung ausgeübt werden, zum Beispiel bei einem Verkehrsunfall eines Kraftfahrzeugs, in dem Rohre durch die Kupplung verbunden sind. Wenn die Kupplung dagegen geöffnet werden soll, um die Rohre gewünschtenfalls zu trennen, kann die durch das Verbindungsmittel bewirkte Verbindung der Stege vorher gelöst werden. Gleichzeitig stellt das Verbindungsmittel einen Montageindikator dar: Wenn nämlich die Verbindung der Stege durch das Verbindungsmittel hergestellt ist, stellt dies ein Anzeichen dafür dar, daß die Verbindung der Rohre durch die Kupplung richtig ausgeführt worden ist, weil die Verbindung der Stege durch das Verbindungsmittel nur dann möglich ist, wenn zuvor die Verbindung der Rohre durch die Kupplung richtig ausgeführt worden ist.

Das Ausführungsbeispiel der erfindungsgemäßen Kupplung nach Fig. 20 unterscheidet sich von dem nach Fig. 1 zum einen dadurch, daß die Stege 9 nicht mit in Umfangsrichtung der Kupplung durchgehenden Nuten 12, sondern mit sich nur teilweise an jeweils einem axialen Ende der Stege 9 in Umfangsrichtung der Kupplung in die Stege 9 hineinerstreckenden, hinterschnittenen Nuten 12a, 12b versehen sind; zum anderen dadurch, daß die Stege 9 nicht durch einteilige Ringe, wie die Ringe 11, sondern an jedem ihrer axialen Enden durch Ringabschnitte 11a, d.h. insgesamt 4 elastisch biegsame, aus Kunststoff oder Federstahl bestehende Abschnitte, von denen nur einer dargestellt ist, verbunden sind. Die Ringabschnitte 11a sind bandförmig und an ihren Enden entsprechend den Nuten 12a, 12b geformt, so daß die Enden der Ringabschnitte 11a axial in die betreffenden Nuten 12a, 12b passend eingeführt werden können und darin axial im Reibschluß und in Umfangsrichtung im Formschluß gehalten werden. Durch radialen Druck von außen auf die Ringabschnitte 11a lassen sich die Stege 9 wiederum radial von den Rohren 1, 2 abheben, um ihre Rastvorsprünge mit den Halterippen 7, 8 der Rohre 1, 2 außer Eingriff zu bringen und die Rohre zu trennen.

Alternativ ist es möglich, statt der axial am einen Ende geschlossenen Nuten 12a, 12b, axial durchgehende Nuten mit gleicher Querschnittsform wie die der Nuten 12a, 12b in den Seiten der Stege 9 und die Ringabschnitte 11a so breit auszubilden, daß sie sich, wie der Ring 11 nach Fig. 16, zumindest nahezu über die gesamte Länge der Stege 9 erstrecken. Insgesamt käme man dann mit nur zwei Ringabschnitten aus.

Eine weitere Alternative besteht darin, daß mehrere über den Umfang der Kupplung gleichmäßig verteilte, in Umfangsrichtung der Kupplung schmalere Stege 9 vorgesehen sind, die jeweils durch in Umfangsrichtung der Kupplung schmalere Ringabschnitte verbunden sind, ansonsten aber der Form und dem Material der Ringabschnitte 11a entsprechen. Je nach Größe des Durchmessers der Rohre 1, 2 kann daher der Kupplungsdurchmesser durch Verwendung einer entsprechenden Anzahl von Stegen und Ringabschnitten dem Rohrdurchmesser angepaßt werden.

## Patentansprüche

1. Kupplung zum Verbinden zweier Rohre (1, 2), die mit Endabschnitten (3, 4) in die Kupplung einführbar und auf jedem Endabschnitt (3, 4) mit einer umlaufenden Halterippe (7; 8) versehen sind, wobei die Kupplung wenigstens einen elastischen Ring (11; 24) aufweist, der wenigstens zwei langgestreckte Stege (9) verbindet, und wobei die Kupplung Rastvorsprünge (10) aufweist, die beim Einführen der Endabschnitte (3, 4) in die Kupplung hinter den Halterippen (7, 8) einrasten und durch Aufweiten wenigstens des einen Ringes (11; 24) ausrastbar sind, um die Verbindung der Rohre (1, 2) zu lösen, **dadurch gekennzeichnet, daß** jeder Ring (11; 24) separat von den Stegen (9) hergestellt ist.

2. Kupplung nach Anspruch 1, **dadurch gekennzeichnet, daß** die Stege (9) biegesteif sind.

3. Kupplung nach Anspruch 1 oder 2, **dadurch gekennzeichnet, daß** die Stege (9) mit Versteifungsrippen (16) versehen sind.

4. Kupplung nach einem der Ansprüche 1 bis 3, **dadurch gekennzeichnet, daß** jeder Ring (11; 24) Federstahl aufweist.

5. Kupplung nach einem der Ansprüche 1 bis 4, **dadurch gekennzeichnet, daß** die Kupplung aus Metall besteht.

6. Kupplung nach einem der Ansprüche 1 bis 4, **dadurch gekennzeichnet, daß** jeder Ring (11) als Federbandschelle (24) ausgebildet ist.

7. Kupplung nach Anspruch 1, **dadurch gekennzeichnet, daß** die Stege (9) und/oder der eine Ring (11) oder wenigstens einer der Ringe (11) Kunststoff, insbesondere verstärkten Kunststoff, aufweisen bzw. aufweist.

8. Kupplung nach einem der Ansprüche 1 bis 6, **dadurch gekennzeichnet, daß** die Stege (9) einen Metallkern aufweisen, der mit Kunststoff umspritzt ist.

9. Kupplung nach einem der Ansprüche 1 bis 8, **dadurch gekennzeichnet, daß** bei zwei Ringen (11; 24) der eine mit dem einen Ende und der andere mit dem anderen Ende jedes Steges (9) verbunden ist.

10. Kupplung nach einem der Ansprüche 1 bis 9, **dadurch gekennzeichnet, daß** jeder Steg (9) pro Ring (11; 24) eine Nut (12; 25) zur Aufnahme eines Ringes (11; 24) aufweist.

11. Kupplung nach den Ansprüchen 9 und 10, **dadurch gekennzeichnet, daß** die Stege (9) in jedem Ende eine Nut (12) zur Aufnahme eines Ringes (11; 24) aufweisen.

12. Kupplung nach Anspruch 10 oder 11, **dadurch gekennzeichnet, daß** sich jede Nut (12; 25) quer zur Längsrichtung der Stege (9) erstreckt.

13. Kupplung nach Anspruch 12, **dadurch gekennzeichnet, daß** sich die Tiefe der Nuten (12) in Längsrichtung der Stege (9) erstreckt und die Weite der Nuten (12) der Dicke der Ringe (11; 24) entspricht.

14. Kupplung nach Anspruch 13, **dadurch gekennzeichnet, daß** die Ringe (11; 24) aus Streifen geformt sind, die in wenigstens einer der Nuten (12) befestigt sind.

15. Kupplung nach Anspruch 14, **dadurch gekennzeichnet, daß** die Enden der Streifen (11a) formschlüssig verbunden sind.

16. Kupplung nach einem der Ansprüche 10 bis 15, **dadurch gekennzeichnet, daß** jeder Ring (11; 24) im - Preß- oder Schnappsitz, form- oder stoffschlüssig in wenigstens einer Nut (12; 25) der Stege (9) befestigt ist.

17. Kupplung nach Anspruch 1 oder 7, **dadurch gekennzeichnet, daß** jeder Ring als geschlossener Ring im Spritzgußverfahren hergestellt ist.

18. Kupplung nach einem der Ansprüche 1 bis 17, **dadurch gekennzeichnet, daß** jeder Ring (11) gewellt ist.

19. Kupplung nach einem der Ansprüche 1, 7 und 18, **dadurch gekennzeichnet, daß** die Ringe (11) durch langgestreckte Teile verbunden sind, die in Längsnuten der Stege (9) im Schnappsitz befestigt sind.

20. Kupplung nach einem der Ansprüche 1 bis 4, 6 und 7, **dadurch gekennzeichnet, daß** die Stege (9) thermoplastischen Kunststoff aufweisen und jeder Ring (11; 24) von dem Material der Stege (9) umspritzt ist.

21. Kupplung nach einem der Ansprüche 1 bis 4, 6, 7 und 21, **dadurch gekennzeichnet, daß** bei zwei Stegen (9) die Stege durch ein Gelenk verbunden sind.

22. Kupplung nach den Ansprüchen 20 und 21, **dadurch gekennzeichnet, daß** das Gelenk ein Filmgelenk oder Scharnier ist.

23. Kupplung nach einem der Ansprüche 6 und 8 oder einem der Ansprüche 20 bis 22, **dadurch gekennzeichnet, daß** bei Ausbildung der Ringe als Federbandschellen (24) an oder bei den Enden der Stege (9) die Spreizbacken (26, 27) der einen Federbandschelle (24) um 180° in Umfangsrichtung der Kupplung gegenüber denen der anderen Federbandschelle versetzt sind.

24. Kupplung nach einem der Ansprüche 1 bis 19, **dadurch gekennzeichnet, daß** jeder Steg (9) aus einem Blechteil durch Stanzen und Biegen geformt ist.

25. Kupplung nach Anspruch 4, **dadurch gekennzeichnet, daß** jeder Ring (11) eine Unterbrechung (29) und ein der Unterbrechung (29) diametral gegenüberliegendes Gelenk (30; 33) aufweist, daß die Stege (9) Kunststoff aufweisen und daß jeder Ring (11), bis auf die Unterbrechung (29) und das Gelenk (30; 33), in dem Kunststoff der Stege (9) festgehalten ist.

26. Kupplung nach Anspruch 25, **dadurch gekennzeichnet, daß** das Gelenk (30; 33) ein elastisch biegsamer Ringteil ist.

27. Kupplung nach Anspruch 26, **dadurch gekennzeichnet, daß** das Gelenk (30; 33) eine nach außen aus dem Ring (11) vorstehende Ausbauchung bildet.

28. Kupplung nach einem der Ansprüche 25 bis 27, **dadurch gekennzeichnet, daß** jeder Ring (11) mit dem Kunststoff der Stege (9) umspritzt ist.

29. Kupplung nach einem der Ansprüche 25 bis 28, **dadurch gekennzeichnet, daß** die Stege (9) beiderseits der Unterbrechung (29) radial nach außen vorstehende Noppen (32) aufweisen.

30. Kupplung nach einem der Ansprüche 25 bis 29, **dadurch gekennzeichnet, daß** nahe bei oder an jedem Stegende jeweils ein Ring (11) vorgesehen ist und die Unterbrechung (29) des einen Rings (11) gegenüber der des anderen in Umfangsrichtung der Ringe (11) um 180° versetzt angeordnet ist.

31. Kupplung nach einem der Ansprüche 25 bis 30, **dadurch gekennzeichnet, daß** die Stege (9) durch ein die oder jede Unterbrechung (29) lösbar überbrükkendes Verbindungsmittel zusammengehalten sind.

32. Kupplung zum Verbinden zweier Rohre (1, 2), die mit Endabschnitten (3, 4) in die Kupplung einführbar und auf jedem Endabschnitt (3, 4) mit einer umlaufenden Halterippe (7; 8) versehen sind, wobei die Kupplung wenigstens zwei elastische Ringabschnitte (11a) aufweist, die wenigstens zwei langgestreckte Stege (9) verbinden, und wobei die Kupplung Rastvorsprünge (10) aufweist, die beim Einführen der Endabschnitte (3, 4) in die Kupplung hinter den Halterippen (7, 8) einrasten und durch Verformen wenigstens des einen Ringabschnitts (11a) ausrastbar sind, um die Verbindung der Rohre (1, 2) zu lösen, **dadurch gekennzeichnet, daß** jeder Ringabschnitt (11a) separat von den Stegen (9) hergestellt ist.

## Claims

1. Coupling for joining two pipes (1, 2), whose end sections (3, 4), each of which is provided with a circumferential locking rib (7, 8), can be inserted into the coupling, wherein the coupling has at least one elastic ring (11, 24) that joins at least two elongated webs (9), and wherein the coupling has stop projections (10), which lock in place behind the locking ribs (7, 8) when the end sections (3, 4) are inserted in the coupling and can be unlocked to release the connection of the pipes (1, 2) by expanding at least one of the rings (11, 24), **characterized in that** each ring (11, 24) is produced separately from the webs (9).

2. Coupling in accordance with Claim 1, **characterized in that** the webs (9) are flexurally stiff.

3. Coupling in accordance with Claim 1 or 2, **characterized in that** the webs (9) are provided with stiffening ribs (16).

4. Coupling in accordance with any of Claims 1 to 3, **characterized in that** each ring (11, 24) comprises spring steel.

5. Coupling in accordance with any of Claims 1 to 4, **characterized in that** the coupling is made of metal.

6. Coupling in accordance with any of Claims 1 to 4, **characterized in that** each ring (11) is designed as a spring band clamp (24).

7. Coupling in accordance with Claim 1, **characterized in that** the webs (9) and/or the one ring (11) or at least one of the rings (11) comprises plastic, in particular reinforced plastic.

8. Coupling in accordance with any of Claims 1 to 6, **characterized in that** the webs (9) comprise a metal core that is molded with plastic.

9. Coupling in accordance with any of Claims 1 to 8, **characterized in that** with two rings (11, 24), one of them is connected with one end of each web (9) and the other is connected with the other end of each web (9).

10. Coupling in accordance with any of Claims 1 to 9, **characterized in that** each web (9) comprises one groove (12, 25) per ring (11, 24) for holding a ring (11, 24).

11. Coupling in accordance with Claim 9 and 10, **characterized in that** each end of the webs (9) comprises a groove (12) for holding a ring (11, 24).

12. Coupling in accordance with Claim 10 or Claim 11, **characterized in that** each groove (12, 25) extends transversely to the longitudinal direction of the webs (9).

13. Coupling in accordance with Claim 12, **characterized in that** the depth of the grooves (12) extends in the longitudinal direction of the webs (9), and the width of the grooves (12) corresponds to the thickness of the rings (11, 24).

14. Coupling in accordance with Claim 13, **characterized in that** the rings (11, 24) are formed from strips, which are secured in at least one of the grooves (12).

15. Coupling in accordance with Claim 14, **characterized in that** the ends of the strips (11 a) are joined by positive locking.

16. Coupling in accordance with any of Claims 10 to 15, **characterized in that** each ring (11, 24) is secured in at least one groove (12, 25) of the webs (9) by an interference fit, snap fit, positive locking, or material bonding.

17. Coupling in accordance with Claim 1 or Claim 7, **characterized in that** each ring is produced as a closed ring by injection molding.

18. Coupling in accordance with any of Claims 1 to 17, **characterized in that** each ring (11) is corrugated.

19. Coupling in accordance with any of Claim 1, 7 and 18, **characterized in that** the rings (11) are joined by elongated parts that are secured in longitudinal grooves of the webs (9) by a snap fit.

20. Coupling in accordance with any of Claims 1 to 4, 6 and 7, **characterized in that** the webs (9) comprise a thermoplastic material, and each ring (11, 24) is molded by the material of the webs (9).

21. Coupling in accordance with any of Claims 1 to 4, 6, 7 and 21, **characterized in that** with two webs (9), the webs are joined by a joint.

22. Coupling in accordance with Claims 20 and 21, **characterized in that** the joint is a film joint or hinge.

23. Coupling in accordance with either of Claims 6 and 8 or any of Claims 20 to 22, **characterized in that** if the rings are designed as spring band clamps (24) on or at the ends of the webs (9), the spreading jaws (26, 27) of one of the spring band clamps (24) are displaced by 180° in the circumferential direction of the coupling relative to those of the other spring band clamp.

24. Coupling in accordance with any of Claims 1 to 19, **characterized in that** each web (9) is formed from a sheet-metal part by punching and bending.

25. Coupling in accordance with Claim 4, **characterized in that** each ring (11) has a break (29) and a joint (30, 33) on the diametrically opposite side from the break (29), that the webs (9) comprise plastic, and that each ring (11) is held in the plastic of the webs (9) except for the break and the joint.

26. Coupling in accordance with Claim 25, **characterized in that** the joint (30, 33) is an elastically flexible part of the ring.

27. Coupling in accordance with Claim 26, **characterized in that** the joint (30, 33) forms a rim that projects outwardly from the ring (11).

28. Coupling in accordance with any of Claims 25 to 27, **characterized in that** each ring (11) is molded with the plastic of the webs (9).

29. Coupling in accordance with any of Claims 25 to 28, **characterized in that** the webs (9) have radially outwardly projecting knobs (32) on both sides of the break (29).

30. Coupling in accordance with any of Claims 25 to 29, **characterized in that** a ring (11) is provided close to or at each end of the web, and the break (29) in one ring (11) is arranged with a displacement of 180° relative to the break (29) in the other ring (11) in the circumferential direction of the rings (11).

31. Coupling in accordance with any of Claims 25 to 30, **characterized in that** the webs (9) are held together by a connection means, which releasably bridges the break or each break (29).

32. Coupling for joining two pipes (1, 2), that are insertable into the coupling with end sections (3, 4) and comprise a circumferential locking rib (7, 8) at each end section (3, 4), wherein the coupling comprises at least two elastic ring sections (11a) that join at least two elongated webs (9), and wherein the coupling comprises stop projections (10), which lock in place behind the locking ribs (7, 8) when the end sections (3, 4) are inserted in the coupling and can be unlocked to release the connection of the pipes (1, 2) by deforming at least one of the ring sections (11a), **characterized in that** each ring section (11 a) is produced separately from the webs (9).

## Revendications

1. Raccord pour l'assemblage de deux tubes (1, 2), qui peuvent être introduits dans le raccord par des extrémités (3, 4) et qui sont pourvus d'une nervure de maintien périphérique (7 ; 8) sur chaque extrémité (3, 4), dans lequel le raccord comprend au moins une bague élastique (11 ; 24) qui relie au moins deux brides allongées (9), et dans lequel le raccord comporte des saillies crantées (10) qui, lors de l'introduction des extrémités (3, 4) dans le raccord, s'encliquent derrière les nervures de maintien (7, 8) et peuvent en être dégagées par élargissement de ladite au moins une bague (11 ; 24) pour désolidariser les tubes (1, 2), **caractérisé en ce que** chaque bague (11 ; 24) est fabriquée séparément des brides (9).

2. Raccord selon la revendication 1, **caractérisé en ce que** les brides (9) sont rigides.

3. Raccord selon la revendication 1 ou 2, **caractérisé en ce que** les brides (9) sont dotées de nervures de rigidification (16).

4. Raccord selon l'une des revendications 1 à 3, **caractérisé en ce que** chaque bague (11 ; 24) comprend de l'acier à ressort.

5. Raccord selon l'une des revendications 1 à 4, **caractérisé en ce que** le raccord est en métal.

6. Raccord selon l'une des revendications 1 à 4, **caractérisé en ce que** chaque bague (11) est réalisée sous forme de collier de serrage à ressort (24).

7. Raccord selon la revendication 1, **caractérisé en ce que** les brides (9) et/ou la bague (11) ou l'une au moins des bagues (11) comprend/comprennent une matière plastique, en particulier une matière plastique renforcée.

8. Raccord selon l'une des revendications 1 à 6, **caractérisé en ce que** les brides (9) comprennent une âme en métal qui est enrobé de matière plastique.

9. Raccord selon l'une des revendications 1 à 8, **caractérisé en ce que** lorsqu'il est prévu deux bagues (11 ; 24) l'une est reliée à une extrémité et l'autre est reliée à l'autre extrémité de chaque bride (9).

10. Raccord selon l'une des revendications 1 à 9, **caractérisé en ce que** chaque bride (9) comporte pour chaque bague (11 ; 24) une gorge (12 ; 25) pour recevoir une bague (11 ; 24).

11. Raccord selon les revendications 9 et 10, **caractérisé en ce que** les brides (9) comportent dans chaque extrémité une gorge (12) pour recevoir une bague (11 ; 24).

12. Raccord selon la revendication 10 ou 11, **caractérisé en ce que** chaque gorge (12 ; 25) s'étend transversalement à la direction longitudinale des brides (9).

13. Raccord selon la revendication 12, **caractérisé en ce que** la profondeur des gorges (12) s'étend en direction longitudinale des brides (9), et la largeur des gorges (12) correspond à l'épaisseur des bagues (11 ; 24).

14. Raccord selon la revendication 13, **caractérisé en ce que** les bagues (11 ; 24) sont formées à partir de bandes qui sont fixés dans l'une au moins des gorges (12).

15. Raccord selon la revendication 14, **caractérisé en ce que** les extrémités des bandes (11a) sont assemblées par coopération de formes.

16. Raccord selon l'une des revendications 10 à 15, **caractérisé en ce que** chaque bague (11 ; 24) est fixée, dans un ajustement à pressage ou à encliquetage, par coopération de formes ou par coopération de matière, dans l'une au moins des gorges (12 ; 25) des brides (9).

17. Raccord selon la revendication 1 ou 7, **caractérisé en ce que** chaque bague est fabriquée sous forme de bague fermée par un procédé de moulage par injection.

18. Raccord selon l'une des revendications 1 à 17, **caractérisé en ce que** chaque bague (11) est ondulée.

19. Raccord selon l'une des revendications 1, 7 et 18, **caractérisé en ce que** les bagues (11) sont reliées par des pièces allongées qui sont fixées par ajustement à encliquetage dans des gorges longitudinales des brides (9).

20. Raccord selon l'une des revendications 1 à 4, 6 et 7, **caractérisé en ce que** les brides (9) comprennent une matière thermoplastique, et chaque bague (11 ; 24) est enrobée par le matériau des brides (9).

21. Raccord selon l'une des revendications 1 à 4, 6, 7 et 21, **caractérisé en ce que** lorsqu'il est prévu deux brides (9), les brides sont reliées par une articulation.

22. Raccord selon les revendications 20 et 21, **caractérisé en ce que** l'articulation est une articulation à film ou une charnière.

23. Raccord selon l'une des revendications 6 et 8 ou l'une des revendications 20 à 22, **caractérisé en ce que** lors de la réalisation des bagues sous forme de collier de serrage à ressort (24), aux extrémités ou près des extrémités des brides (9), les mâchoires d'écartement (26, 27) de l'un des colliers de serrage à ressort (24) sont décalées de 180° en direction périphérique du raccord par rapport à celles de l'autre collier de serrage à ressort.

24. Raccord selon l'une des revendications 1 à 19, **caractérisé en ce que** chaque bride (9) est formée à partir d'une pièce en tôle par poinçonnage et par pliage.

25. Raccord selon la revendication 4, **caractérisé en ce que** chaque bague (11) comporte une interruption (29) et une articulation (30 ; 38) diamétralement opposée à l'interruption (29), **en ce que** les bagues (9) comprennent une matière plastique, et **en ce que** chaque bague (11), sauf à l'interruption (29) et à l'articulation (30 ; 33), est fermement retenue dans la matière plastique des brides (9).

26. Raccord selon la revendication 25, **caractérisé en ce que** l'articulation (30 ; 33) est une pièce annulaire capable de fléchir de manière élastique.

27. Raccord selon la revendication 26, **caractérisé en ce que** l'articulation (30 ; 33) forme un bombement qui dépasse vers l'extérieur hors de la bague (11).

28. Raccord selon l'une des revendications 25 à 27, **caractérisé en ce que** chaque bague (11) est enrobée avec la matière plastique des brides (9)

29. Raccord selon l'une des revendications 25 à 28, **caractérisé en ce que** les brides (9) comportent des deux côtés de l'interruption (29) des bosses (32) dépassant radialement vers l'extérieur.

30. Raccord selon l'une des revendications 25 à 29, **caractérisé en ce qu'**à proximité de ou à chaque extrémité des brides, il est prévu respectivement une bague (11), et l'interruption (29) de l'une des bagues (11) est agencée avec décalage de 180° par rapport à celle de l'autre en direction périphérique des bagues (11).

31. Raccord selon l'une des revendications 25 à 30, **caractérisé en ce que** les brides (9) sont retenues ensemble par un organe de liaison qui coiffe de manière amovible l'interruption ou chaque interruption (29).

32. Raccord pour l'assemblage de deux tubes (1, 2) qui peuvent être introduits dans le raccord par des extrémités (3, 4) et qui sont dotés d'une nervure de maintien périphérique (7 ; 8) sur chaque tronçon d'extrémité, dans lequel le raccord comprend au moins deux tronçons de bague élastique (11a) qui relient au moins deux brides allongées (9), et dans lequel le raccord comporte des saillies crantées (10) qui, lors de l'introduction des extrémités (3, 4) dans le raccord, viennent s'encliqueter derrière les nervures de maintien (7, 8) et peuvent en être désengagées par déformation de l'un au moins des tronçons de bague (11a), afin de désolidariser les tubes (1, 2), **caractérisé en ce que** chaque tronçon de bague (11a) est fabriqué séparément des brides (9).
